# EUROPÄISCHE PATENTSCHRIFT

(11) **EP 2 499 427 B1**
(45) Veröffentlichungstag und Bekanntmachung des Hinweises auf die Patenterteilung: **04.01.2017**
(21) Anmeldenummer: 10787710.2
(22) Anmeldetag: 02.11.2010
(51) Int. Cl.: H01J 5/54, H01J 61/56, H05B 41/04, F21S 8/10

(54) **HOCHDRUCKENTLADUNGSLAMPE**
HIGH-PRESSURE DISCHARGE LAMP
LAMPE À DÉCHARGE HAUTE PRESSION

(30) Priorität: 11.11.2009 DE 102009052704; 24.11.2009 DE 102009054376
(43) Veröffentlichungstag der Anmeldung: 19.09.2012
(73) Patentinhaber: OSRAM GmbH, 80807 München (DE)
(72) Erfinder: PIETSCH, Karsten, 13469 Berlin (DE); ASMUSSEN, Knut, 81541 München (DE); PROTSCH, Matthias, 10115 Berlin (DE)
(86) Internationale Anmeldenummer: PCT/EP2010/066651
(87) Internationale Veröffentlichungsnummer: WO 2011/057921

(56) Entgegenhaltungen:
- EP-B1- 1 352 547
- DE-A1-102006 000 169
- DE-C1- 19 913 942
- US-A1- 2007 064 437
- US-A1- 2008 157 696
- US-A1- 2008 191 627

## Beschreibung

Die Erfindung betrifft eine Hochdruckentladungslampe gemäß dem Oberbegriff des Anspruchs 1.

### I. Stand der Technik

Eine derartige Hochdruckentladungslampe ist beispielsweise in der EP 0 975 007 A1 offenbart. Diese Schrift beschreibt eine Hochdruckentladungslampe mit einem Lampensockel, einem Entladungsgefäß und Komponenten einer Zündvorrichtung zum Zünden der Gasentladung im Entladungsgefäß sowie Komponenten einer Betriebsvorrichtung zum Betreiben der Hochdruckentladungslampe nach erfolgter Zündung der Gasentladung, wobei die vorgenannten Komponenten von Zünd- und Betriebsvorrichtung im Innenraum des Lampensockels untergebracht sind.

US2008/0157696 offenbart eine Hochdruckentladungslampe mit den Merkmalen des Oberbegriffs des Anspruchs 1. In diesem Dokument ist der Zündtransformator in einer Baueinheit montiert.

### II. Darstellung der Erfindung

Es ist Aufgabe der Erfindung, eine gattungsgemäße Hochdruckentladungslampe mit einem vereinfachten modularen Aufbau und einer verbesserten elektrischen Isolierung der Zündvorrichtung bereitzustellen.

Diese Aufgabe wird erfindungsgemäß durch eine Hochdruckentladungslampe mit den Merkmalen des Anspruchs 1 gelöst. Besonders vorteilhafte Ausführungen der Erfindung sind in den abhängigen Ansprüchen beschrieben.

Die erfindungsgemäße Hochdruckentladungslampe besitzt einen Lampensockel, ein Entladungsgefäß und Komponenten einer Zündvorrichtung zum Zünden der Gasentladung im Entladungsgefäß der Hochdruckentladungslampe, wobei der Lampensockel einen Innenraum besitzt, in dem die Komponenten der Zündvorrichtung angeordnet sind. Erfindungsgemäß sind zumindest die Hochspannung führenden Komponenten der Zündvorrichtung zu einer separaten Baueinheit mit einem eigenen Gehäuse zusammengefasst, die im Innenraum des Lampensockels angeordnet ist. Dadurch können zumindest die Hochspannung führenden Komponenten der Zündvorrichtung als eigenständiges Bauteil vorgefertigt, getestet und in den Lampensockel montiert werden. Aufgrund ihres eigenen Gehäuses besitzt diese Baueinheit außerdem eine verbesserte elektrische Isolation gegenüber im Innenraum des Lampensockels angeordneten weiteren elektrischen Komponenten.

Bei der Zündvorrichtung handelt es sich beispielsweise um eine Impulszündvorrichtung, die als wesentliche Komponenten einen Zündtransformator, einen Zündkondensator und eine Funkenstrecke oder einen ähnlichen Schwellwertschalter aufweist. Während der Zündphase der Hochdruckentladungslampe wird der Zündkondensator bis zur Durchbruchsspannung der Funkenstrecke bzw. des Schwellwertschalters aufgeladen. Beim Erreichen der Durchbruchsspannung entlädt sich der Zündkondensator über die Funkenstrecke bzw. den Schwellwertschalter und die Primärwicklung des Zündtransformators. Dadurch werden in der Sekundärwicklung des Zündtransformators Hochspannungsimpulse generiert, die zur Zündung der Gasentladung im Entladungsraum führen. Im Fall einer Impulszündvorrichtung umfasst die als Baueinheit ausgebildete Zündvorrichtung der erfindungsgemäßen Hochdruckentladungslampe zumindest die vorgenannten wesentlichen Bauteile, die während der Zündphase der Hochdruckentladungslampe Hochspannung führen. Zusätzlich können im Lampensockel weitere während des Betriebs Hochspannung führende Bauteile, wie beispielsweise eine oder mehrere Funkentstördrosseln, vorgesehen sein, die ebenfalls als Baueinheit mit den Hochspannung führenden Komponenten der Zündvorrichtung der erfindungsgemäßen Hochdruckentladungslampe ausgebildet sein können.

Vorteilhafterweise ist die Baueinheit auf einer Montageplatine angeordnet, um einen möglichst flachen Aufbau der Zündvorrichtung und des Lampensockels zu gewährleisten. Neben der Baueinheit können Komponenten einer Betriebsvorrichtung für die Hochdruckentladungslampe auf derselben Montageplatine angeordnet sein.

Die Zündvorrichtung der erfindungsgemäßen Hochdruckentladungslampe enthält vorzugsweise einen Zündtransformator mit mindestens einer Primärwicklung und mindestens einer Sekundärwicklung sowie einen mit der mindestens einen Sekundärwicklung verbundenen Hochspannungsanschluss, wobei der Hochspannungsanschluss einen mit einer aus dem Entladungsgefäß herausragenden Stromzuführung verbundenen Abschnitt aufweist, der durch mindestens eine Wand oder einen Wandabschnitt von den Komponenten der Zündvorrichtung und den Komponenten der Betriebsvorrichtung getrennt ist. Mit Hilfe des Zündtransformators wird während der Zündphase der Hochdruckentladungslampe die Zündspannung zum Zünden der Gasentladung im Entladungsgefäß der Hochdruckentladungslampe generiert und mittels des Hochspannungsanschlusses wird diese Zündspannung einer Stromzuführung und einer damit verbundenen Elektrode der Hochdruckentladungslampe zugeführt.

Der mit der Stromzuführung verbundene Abschnitt des Hochspannungsanschlusses ist vorzugsweise als Klemmkontakt oder Schneidkontakt ausgebildet, um eine einfache und zuverlässige elektrisch leitende Verbindung zwischen Stromzuführung und Hochspannungsanschluss zu gewährleisten, die ohne einen anschließenden Schweiß- oder Lötprozess realisierbar ist. Dadurch benötigt der Lampensockel keine Öffnungen, über welche die Verbindungsstelle von Stromzuführung und Hochspannungsanschluss für Schweiß- oder Lötwerkzeuge zugänglich ist. Aus dem gleichen Grund besteht der Hochspannungsanschluss vorzugsweise aus einem steifen Metallblech oder Metallsteg, dessen eines Ende mit der Sekundärwicklung des Zündtransformators verbunden ist und dessen anderes Ende mit dem vorgenannten Schneid- oder Klemmkontakt ausgestattet ist, um eine zuverlässige Verbindung mit der aus dem sockelnahen Ende des Entladungsgefäßes herausragenden Stromzuführung zu ermöglichen.

Die Funkenstrecke und der Zündkondensator werden vorteilhafterweise mit Kontaktstiften elektrisch verbunden, die vorzugsweise ebenfalls als Schneidklemmen oder als Klemmkontakte ausgeführt sind. Die bedrahteten Bauelemente werden hierzu beispielsweise von V-förmigen Ausbildungen der Kontaktstifte aufgenommen, die dann z.B. zur Erhöhung der Verbindungssicherheit gegebenenfalls noch geschweißt, nachgeprägt oder gelötet werden können. Die Kontaktstifte werden vorteilhaft in das Gehäuse der Zündvorrichtung gesteckt oder mit Kunststoff umspritzt und bilden am Boden der Zündvorrichtung Kontaktierelemente zur elektrischen Verbindung mit der Montageplatine. Diese Kontaktierelemente sind vorteilhafterweise derart ausgebildet, dass sie sowohl mittels der klassischen Durchstecktechnik (THT, Through Hole Technology) als auch mittels der Einpresstechnik kontaktiert werden können.

Der Zündtransformator der erfindungsgemäßen Hochdruckentladungslampe besitzt vorzugsweise einen Ferritkern, auf dem die mindestens eine Sekundärwicklung angeordnet ist, um eine hohe Permeabilität und eine räumlich kompakte Anordnung des Zündtransformators zu ermöglichen. Zwecks kompakter räumlicher Anordnung ist der Ferritkern vorzugsweise als Stabkern ausgebildet.

Vorteilhafterweise besitzt der Zündtransformator der erfindungsgemäßen Hochdruckentladungslampe einen den Ferritkern umgebenden Spulenkörper aus elektrisch isolierendem Material, auf dem die mindestens eine Primärwicklung angeordnet ist, um eine räumlich kompakte Anordnung des Zündtransformators und eine gute induktive Kopplung zwischen Primär- und Sekundärwicklung zu gewährleisten.

Der Spulenkörper bildet vorzugsweise einen Rahmen aus, der den Ferritkern an zwei einander gegenüberliegenden Seiten abstützt und vorzugsweise eine flache und kompakte Bauweise besitzt. Dadurch kann auf einfache Weise, ohne großen Materialaufwand eine Platz sparende Halterung für den Ferritkern und die mindestens eine darauf abgeordnete Sekundärwicklung gewährleistet werden. Der rahmenartige Spulenkörper kann ferner zur Fixierung der Enden von Primär- und Sekundärwicklungen sowie zur Fixierung des Hochspannungsanschlusses genutzt werden. Außerdem ermöglicht er, die Primär- und Sekundärwicklung in elektrisch isolierende Vergussmasse einzubetten und damit die Hochspannungsfestigkeit des Zündtransformators zu erhöhen.

Der Lampensockel der erfindungsgemäßen Hochdruckentladungslampe bildet erfindungsgemäß ein zweites Gehäuse aus, das einen Boden und eine haubenartige Abdeckung besitzt, um auf einfache Weise die Baueinheit und weitere elektrische Komponenten der Zünd- oder Betriebsvorrichtung im Lampensockel bzw. im zweiten Gehäuse unterbringen zu können. Gemäß der Erfindung ist die mit der Baueinheit und weiteren elektrischen Komponenten bestückte Montageplatine am Boden des zweiten Gehäuses angeordnet, so dass die haubenartige Abdeckung die auf der Montageplatine angeordneten Bauteile abdeckt. Zur Verbindung von Boden und haubenartiger Abdeckung können die standardmäßigen Verbindungstechniken wie zum Beispiel Nieten, Bördeln, Heißverstemmen, Schweißen, etc. verwendet werden.

Die haubenartige Abdeckung ist vorteilhafterweise mit einem Durchbruch für das Entladungsgefäß oder für aus dem Entladungsgefäß herausragende Stromzuführungen versehen, um die Stromzuführungen für die im Entladungsgefäß angeordneten Leuchtmittel mit der Zündvorrichtung und den Komponenten der Betriebsvorrichtung verbinden zu können. Zusätzlich ist vorzugsweise an der haubenartigen Abdeckung eine Halterung für das Entladungsgefäß oder für einen das Entladungsgefäß umschließenden Außenkolben befestigt. Dadurch werden die elektrischen Verbindungen zwischen den aus dem Entladungsgefäß herausragenden Stromzuführungen und der Zündvorrichtung bzw. den Komponenten der Betriebsvorrichtung mechanisch entlastet. Insbesondere wird das Gewicht des Entladungsgefäßes nicht von den vorgenannten elektrischen Verbindungen, sondern von der haubenartigen Abdeckung getragen. Die Halterung für das Entladungsgefäß bzw. für die aus Entladungsgefäß und Außenkolben bestehende Lampengefäßeinheit ist vorzugsweise ringartig ausgebildet und am Rand des Durchbruchs in der haubenartigen Abdeckung angeordnet.

Der Lampensockel der erfindungsgemäßen Hochdruckentladungslampe ist vorzugsweise mit Mitteln zur elektromagnetischen Abschirmung der in seinem Innenraum angeordneten Komponenten der Zündvorrichtung und der Betriebsvorrichtung versehen, um Störungen durch hochfrequente Signale, die während des Lampenbetrieb von Zünd- oder Betriebsvorrichtung erzeugt werden, zu verhindern. Beispielsweise ist der Lampensockel zu diesem Zweck auf seiner Innen- oder Außenseite mit Metall beschichtet oder die haubenartige Abdeckung und der Boden bestehen komplett aus Metall oder elektrisch leitfähigem Kunststoff oder aus Kunststoff, der metallisch beschichtet ist.

Die erfindungsgemäße Hochdruckentladungslampe ist vorteilhafterweise mit Mitteln zur elektromagnetischen Abschirmung der im Innenraum des Entladungsgefäßes angeordneten Leuchtmittel versehen, um Störungen durch hochfrequente Signale zu verhindern, die gegebenenfalls während des Lampenbetriebs, insbesondere beim Betrieb der Hochdruckentladungslampe mit Strömen im Megahertz- oder Gigahertzbereich, von den Leuchtmitteln emittiert werden. Beispielsweise ist zu diesem Zweck das Entladungsgefäß oder ein das Entladungsgefäß umgebender Außenkolben mit einer für Licht durchlässigen elektrisch leitfähigen Beschichtung versehen. Für diesen Zweck eignet sich beispielsweise eine Beschichtung mit Indium-Zinnoxid (so genannte ITO-Schicht).

### III. Beschreibung der bevorzugten Ausführungsbeispiele

Nachstehend wird die Erfindung anhand eines bevorzugten Ausführungsbeispiels näher erläutert. Es zeigen:
- Figur 1: Eine Draufsicht auf die Hochdruckentladungslampe gemäß dem bevorzugten Ausführungsbeispiel
- Figur 2: Eine Darstellung der Komponenten der in Figur 1 abgebildeten Hochdruckentladungslampe ohne Sockelgehäuse
- Figur 3: Eine Draufsicht auf die im Lampensockel angeordnete Montageplatine mit den darauf fixierten elektrischen Bauelementen der Betriebsvorrichtung und der Zündvorrichtung
- Figur 4: Eine Draufsicht auf den in Figur 3 abgebildeten Zündtransformator

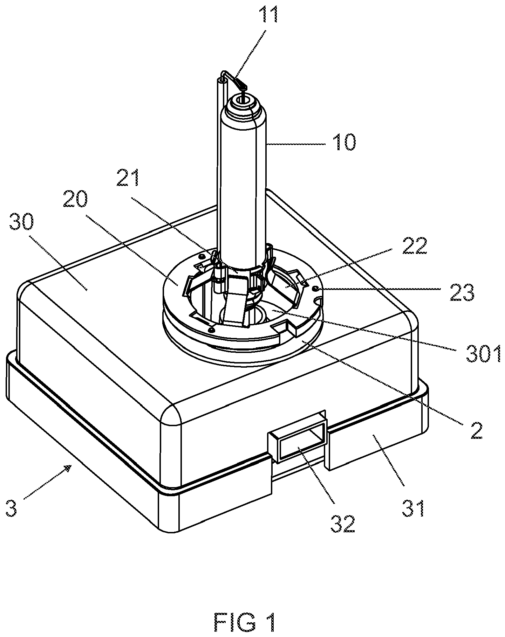

In Figur 1 ist schematisch eine Hochdruckentladungslampe gemäß dem bevorzugten Ausführungsbeispiel der Erfindung dargestellt. Bei dieser Hochdruckentladungslampe handelt es sich um eine Halogen-Metalldampf-Hochdruckentladungslampe 1 mit einer elektrischen Leistungsaufnahme von nominal 25 Watt, die als Lichtquelle für einen Kraftfahrzeugscheinwerfer vorgesehen ist.

Diese Hochdruckentladungslampe 1 besitzt eine Lampengefäßbaueinheit 10, die aus einem Entladungsgefäß und einem das Entladungsgefäß umgebenden Außenkolben besteht. Im Innenraum des Entladungsgefäßes sind zwei Gasentladungselektroden und eine Füllung zum Erzeugen einer Gasentladung angeordnet. Die Füllung ist quecksilberfrei ausgebildet und besteht aus Halogeniden, vorzugsweise Jodiden, der Metalle Natrium, Scandium, Indium und Zink und enthält zusätzlich Xenon mit einem Fülldruck im Bereich von 1,3 Megapascal bis 1,8 Megapascal. Die vorgenannten Fülldruckwerte beziehen sich auf eine Temperatur von 22°C.

Die Lampengefäßbaueinheit 10 ist mittels einer ringartigen Halterung 2 aus Kunststoff, einer Metallmanschette 21 und vier metallischen Schweißlaschen 22 und sowie einer metallischen Ringscheibe 20 am haubenartigen Oberteil 30 des Lampensockels 3 fixiert. Die Metallmanschette 21 umgibt den Außenkolben der Lampengefäßbaueinheit 10 mit Klemmsitz. Jeweils ein Ende der der vier Schweißlaschen 22 ist mit der Metallmanschette 21 verschweißt. Das andere Ende der Schweißlaschen 22 ist jeweils mit der metallischen Ringscheibe 20, die auf der Oberseite der ringartigen Halterung 2 fixiert ist und diese abdeckt, verschweißt. Die Ringachse der Halterung 2 ist koaxial zur Achse der im Wesentlichen zylindrischen Lampengefäßbaueinheit 10 angeordnet. Die durch die metallische Ringscheibe 20 definierte Ebene dient als Referenzebene zur Ausrichtung der Lampengefäße im Reflektor des Fahrzeugscheinwerfers. Die ringartige Halterung 2 und die metallische Ringscheibe 20 sind beispielsweise mittels Schrauben 23 mit dem haubenartigen Oberteil 30 des Sockels 3 verbunden. Das haubenartige Oberteil 30 des Lampensockels 3 besitzt Durchbruch 301, durch den das sockelseitige Ende der Lampengefäßbaueinheit 10 und eine aus dem sockelfernen Ende der Lampengefäßbaueinheit 10 herausragende und zum Lampensockel 3 zurückgeführte Stromrückleitung 11 in den Innenraum des Lampensockels 3 hindurchragen. Das in den Sockelinnenraum hineinragende Ende der Stromrückleitung 11 ist mit einem elektrischen Kontakt auf einer Montageplatine 4, auf der elektrische Komponenten einer Zünd- oder bzw. und Betriebsvorrichtung der Hochdruckentladungslampe angeordnet sind, verbunden. Das haubenartige Oberteil 30 bildet zusammen mit dem Bodenteil 31 den im Wesentlichen quaderförmigen Lampensockel 3 der Hochdruckentladungslampe 1, in dessen Innenraum eine Zündvorrichtung zum Zünden der Gasentladung in der Hochdruckentladungslampe 1 und die Komponenten 6 einer Betriebsvorrichtung zum Betreiben der Hochdruckentladungslampe 1 nach erfolgter Zündung der Gasentladung angeordnet sind. Die Seitenwand des haubenartigen Oberteils 30 ist mit einer Aussparung 303 für einen Stecker 32 versehen, der den elektrischen Anschluss der Hochdruckentladungslampe 1 bildet. Am Bodenteil 31 des Lampensockels 3 ist eine Montageplatine 4 angeordnet und fixiert, die mit der Zündvorrichtung 5 und den Komponenten 6 der Betriebsvorrichtung für die Hochdruckentladungslampe 1 bestückt ist.

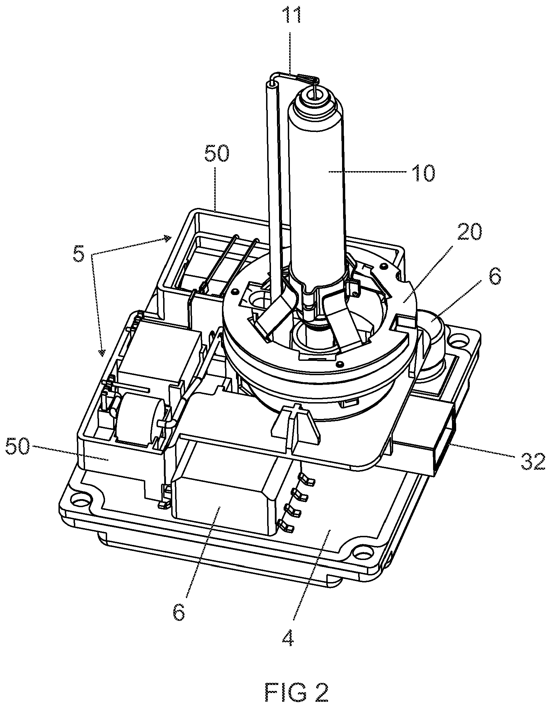

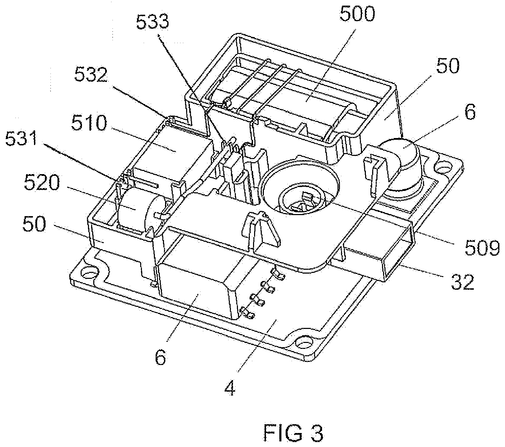

In den Figuren 2 und 3 ist die Montageplatte 4 mit den darauf fixierten Komponenten 6 der Betriebsvorrichtung und der Zündvorrichtung 5 abgebildet. Bei der Zündvorrichtung 5 handelt es sich um eine Impulszündvorrichtung, deren Hochspannung führende Komponenten als vorgefertigte Baueinheit 5 ausgebildet sind und in einem eigenen Gehäuse 50 angeordnet sind. Die Impulszündvorrichtung umfasst einen Zündtransformator 500, einen Zündkondensator 510 und ein Schwellwertelement wie beispielsweise eine Funkenstrecke 520 sowie Kontaktstifte 531, 532, 533 zur Kontaktierung der Bauelemente der Zündvorrichtung mit Kontakten auf der Montageplatine. Gegebenenfalls ist zusätzlich ein Ladewiderstand in der Zündvorrichtung untergebracht. Die Baueinheit 5 besteht aus dem Zündtransformator 500, dem Zündkondensator 510 und der Funkenstrecke 520 sowie dem Gehäuse 50. Die Kontaktstifte 531, 532, 533 stellen jeweils die Verbindung zwischen den bedrahteten Bauelementen 500 bis 520 und der Montageplatine 4 her. Auf der einen Seite nehmen die Kontaktstifte 531, 532, 533 mit einer ausgebildeten V-förmigen Kontur die Drahtenden der vorgenannten Bauelemente auf und auf der anderen Seite stellen sie den elektrischen Kontakt zur Montageplatine 4 her. Die Verbindung zwischen den Kontaktstiften 531, 532, 533 und der Montageplatine 4 kann unter Verwendung der klassischen Verbindungstechnologie wie beispielsweise Löten oder Einpressen hergestellt werden.

Der oben genannte Ladewiderstand ist kein Bestandteil der Baueinheit, sondern außerhalb des Gehäuses 50 angeordnet. Das Gehäuse 50 ist einseitig offen, um das Einfüllen einer elektrisch isolierenden Vergussmasse zu ermöglichen. Die Impulszündvorrichtung 5 stellt ein eigenständiges Modul dar, das wie ein einzelnes Bauteil auf die Montageplatine 4 montiert ist. Das freie Ende 509 des Hochspannungsanschlusses 501 der Sekundärwicklung des Zündtransformators 500 ist von einem ringförmigen Wandabschnitt des Gehäuses 50 umgeben. Die Komponenten der 6 der Betriebsvorrichtung bilden einen Hochsetzsteller und einen vom Hochsetzsteller gespeisten Vollbrückenwechselrichter, in dessen Brückenzweig die Entladungsstrecke der Hochdruckentladungslampe 1 geschaltet ist. Mittels des Hochsetzstellers und des Vollbrückenwechselrichters wird aus der Bordnetzspannung des Kraftfahrzeugs eine niederfrequente Wechselspannung zum Betrieb der Hochdruckentladungslampe generiert.

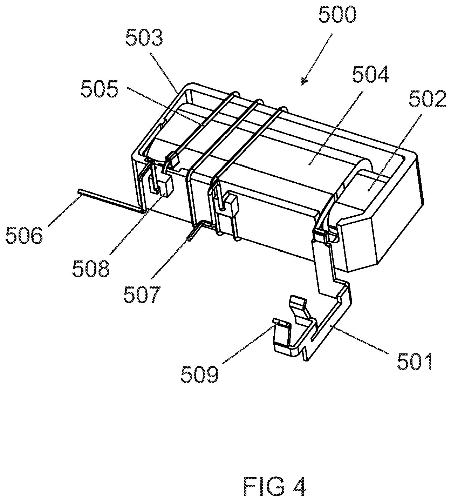

In der Figuren 4 sind Details des Zündtransformators 500 dargestellt. Der Zündtransformator 500 besitzt einen stabförmigen Ferritkern 502, der von einem im Wesentlichen rechteckigen Kunststoffrahmen 503 umgeben ist, so dass die Stirnseiten des Ferritkerns 502 mit Klemmsitz zwischen zwei einander gegenüber liegenden kurzen Seiten des Kunststoffrahmens 503 angeordnet sind. Der stabförmige Ferritkern 502 besitzt einen ovalen Querschnitt. Unmittelbar auf den Ferritkern 502 ist die Sekundärwicklung 504 des Zündtransformators 500 gewickelt, und zwar so, dass der Kunststoffrahmen 503 den Ferritkern 502 und die darauf gewickelte Sekundärwicklung 504 umrahmt. Die Primärwicklung 505 des Zündtransformators 500 ist auf den Kunststoffrahmen 503 gewickelt, so dass sie auf der äußeren Oberfläche der langen Seiten des rechteckförmigen Kunststoffrahmens 503 aufliegt und den Ferritkern 502 mit der darauf angeordneten Sekundärwicklung 504 überspannt. Die Windungen von Sekundärwicklung 504 und Primärwicklung 505 sind voneinander elektrisch isoliert angeordnet. Der Zündtransformator 500 besitzt drei elektrische Anschlüsse 501, 506 und 507. Der Anschluss 501 ist als Hochspannungsanschluss ausgebildet, an dem während der Zündphase die Hochspannung zum Zünden der Gasentladung in der Hochdruckentladungslampe bereitgestellt wird. Der Anschluss 501 ist mit einem ersten Ende der Sekundärwicklung 504 elektrisch leitend verbunden. Die Anschlüsse 506 und 507 sind die Enden der Primärwicklung 505 und dienen zur Spannungsversorgung des Zündtransformators 500. Der Anschluss 506 ist außerdem elektrisch leitend mit dem zweiten Ende der Sekundärwicklung 504 verbunden. Die Enden 506, 507 der Primärwicklung verlaufen in Führungsstegen 508, die an einer langen Seite des Kunststoffrahmens 503 an deren Außenseite angeformt sind, und ragen über die Führungsstege 508 hinaus. Der Anschluss 501 wird von einem Stanzblechteil gebildet, der mit dem ersten Ende der Sekundärwicklung 504 durch ein Schweißverfahren, einem Lötverfahren oder einer ähnlichen Prozesstechnik verbunden ist. Das freie Ende 509 des Anschlusses 501 ist als Kontaktklemme ausgebildet, die das Ende einer aus dem sockelseitigen Ende der Lampengefäßeinheit 10 herausragenden Stromzuführung (nicht abgebildet) klemmend aufnimmt, so dass eine elektrisch leitende Verbindung zwischen dem freien Ende 509 und der vorgenannte Stromzuführung gewährleistet ist.

Die Erfindung beschränkt sich nicht auf das oben näher beschriebene Ausführungsbeispiel. Beispielsweise kann die Baueinheit 5 die komplette Zündvorrichtung, inklusive Ladewiderstand für den Zündkondensator, sowie auch weitere Hochspannung führende Bauteile, wie beispielsweise Funkentstördrosseln, enthalten.

## Patentansprüche

1. Hochdruckentladungslampe mit einem Lampensockel (3), einem Entladungsgefäß und Komponenten einer Zündvorrichtung zum Zünden der Gasentladung im Entladungsgefäß der Hochdruckentladungslampe (1), wobei der Lampensockel (3) einen Innenraum besitzt, in dem die Komponenten der Zündvorrichtung angeordnet sind,
**dadurch gekennzeichnet, dass**
zumindest die Hochspannung führenden Komponenten (500, 510, 520) der Zündvorrichtung eine im Innenraum des Lampensockels angeordnete Baueinheit (5) bilden, die ein eigenes Gehäuse (50) besitzt und auf einer Montageplatine (4) angeordnet ist, wobei der Lampensockel (3) ein zweites Gehäuse bildet, das einen Boden (31) und eine haubenartige Abdeckung (30) besitzt, und wobei die Montageplatine (4) am Boden (31) des zweiten Gehäuses angeordnet ist und die haubenartige Abdeckung (30) die Baueinheit (5) sowie die auf der Montageplatine (4) angeordneten Komponenten (6) der Zünd- oder Betriebsvorrichtung abdeckt.

2. Hochdruckentladungslampe nach Anspruch 1, wobei die Hochspannung führenden Komponenten der Zündvorrichtung einen Zündtransformator (500), einen Zündkondensator (510) und eine Funkenstrecke oder ein ähnliches Schwellwertelement (520) umfassen.

3. Hochdruckentladungslampe nach Anspruch 2, wobei der Zündtransformator (500) mindestens eine Primärwicklung (505) und mindestens eine Sekundärwicklung (502) sowie einen mit der mindestens einen Sekundärwicklung (504) verbundenen Hochspannungsanschluss besitzt, und wobei der Hochspannungsanschluss (501) einen mit einer aus dem Entladungsgefäß herausragenden Stromzuführung verbundenen Abschnitt (509) aufweist.

4. Hochdruckentladungslampe nach Anspruch 3, wobei der mit einer aus dem Entladungsgefäß herausragenden Stromzuführung verbundene Abschnitt des Hochspannungsanschlusses (501) als Klemmkontakt oder Schneidkontakt (509) ausgebildet ist.

5. Hochdruckentladungslampe nach Anspruch 3, wobei der Zündtransformator (500) einen Ferritkern (504) aufweist, auf dem die mindestens eine Sekundärwicklung (504) angeordnet ist.

6. Hochdruckentladungslampe nach Anspruch 5, wobei der Ferritkern als Stabkern (502) ausgebildet ist.

7. Hochdruckentladungslampe nach einem der Ansprüche 5 bis 6, wobei der Zündtransformator (500) einen den Ferritkern (502) umgebenden Spulenkörper (503) aus elektrisch isolierendem Material besitzt, auf dem die mindestens eine Primärwicklung (505) angeordnet ist.

8. Hochdruckentladungslampe nach Anspruch 7, wobei der Spulenkörper als Rahmen (503) ausgebildet ist, der den Ferritkern (502) an zwei einander gegenüber liegenden Seiten abstützt.

9. Hochdruckentladungslampe nach Anspruch 1, wobei die haubenartige Abdeckung (30) einen Durchbruch (301) für das Entladungsgefäß oder für eine aus dem Entladungsgefäß herausragende Stromzuführung (11) besitzt.

10. Hochdruckentladungslampe nach einem der Ansprüche 1 bis 9, wobei der Lampensockel (3) mit Mitteln zur elektromagnetischen Abschirmung der in seinem Innenraum angeordneten Komponenten der Zündvorrichtung der Betriebsvorrichtung versehen ist.

11. Hochdruckentladungslampe nach einem der Ansprüche 1 bis 9, wobei die Hochdruckentladungslampe mit Mitteln zur elektromagnetischen Abschirmung der im Inneren des Entladungsgefäßes angeordneten Leuchtmittel versehen ist.

## Claims

1. High-pressure discharge lamp comprising a lamp base (3), a discharge vessel and components of a starting apparatus for starting the gas discharge in the discharge vessel of the high-pressure discharge lamp (1), wherein the lamp base (3) has an interior space in which the components of the starting apparatus are arranged,
**characterized in that**
at least the high-voltage-carrying components (500, 510, 520) of the starting apparatus form a structural unit (5) which is arranged in the interior space of the lamp base, which has its own housing (50) and which is arranged on a mounting plate (4), wherein the lamp base (3) forms a second housing which has a base (31) and hood-like cover (30), and wherein the mounting plate (4) is arranged on the base (31) of the second housing and the hood-like cover (30) covers the structural unit (5) and also the components (6) of the starting or operating apparatus, which components are arranged on the mounting plate (4).

2. High-pressure discharge lamp according to Claim 1, wherein the high-voltage-carrying components of the starting apparatus comprise a starting transformer (500), a starting capacitor (510) and a spark gap or a similar threshold value element (520).

3. High-pressure discharge lamp according to Claim 2, wherein the starting transformer (500) has at least one primary winding (505) and at least one secondary winding (502) and also a high-voltage connection which is connected to the at least one secondary winding (504), and wherein the high-voltage connection (501) has a section (509) which is connected to a power supply line which protrudes out of the discharge vessel.

4. High-pressure discharge lamp according to Claim 3, wherein the section of the high-voltage connection (501) which is connected to a power supply line which protrudes out of the discharge vessel is in the form of a clamping contact or an insulation-displacement contact (509).

5. High-pressure discharge lamp according to Claim 3, wherein the starting transformer (500) has a ferrite core (504) on which the at least one secondary winding (504) is arranged.

6. High-pressure discharge lamp according to Claim 5, wherein the ferrite core is in the form of a rod-type core (502).

7. High-pressure discharge lamp according to one of Claims 5 to 6, wherein the starting transformer (500) has a coil former (503) which surrounds the ferrite core (502), which is composed of electrically insulating material and on which the at least one primary winding (505) is arranged.

8. High-pressure discharge lamp according to Claim 7, wherein the coil former is in the form of a frame (503) which supports the ferrite core (502) on two sides which are situated opposite one another.

9. High-pressure discharge lamp according to Claim 1, wherein the hood-like cover (30) has an aperture (301) for the discharge vessel or for a power supply line (11) which protrudes out of the discharge vessel.

10. High-pressure discharge lamp according to one of Claims 1 to 9, wherein the lamp base (3) is provided with means for electromagnetically shielding the components of the starting apparatus of the operating apparatus, which components are arranged in the interior space of the said lamp base.

11. High-pressure discharge lamp according to one of Claims 1 to 9, wherein the high-pressure discharge lamp is provided with means for electromagnetically shielding the luminous means which are arranged in the interior of the discharge vessel.

## Revendications

1. Lampe à décharge haute pression avec un socle de lampe (3), une enceinte de décharge et des composants d'un dispositif d'allumage pour l'allumage de la décharge gazeuse dans l'enceinte de décharge de la lampe à décharge haute pression (1), dans laquelle le socle de lampe (3) comporte un espace intérieur, dans lequel les composants du dispositif d'allumage sont agencés, **caractérisée en ce qu'**au moins des composants (500, 510, 520) du dispositif d'allumage qui conduisent la haute tension forment une unité de construction (5) agencée dans l'espace intérieur du socle de lampe, laquelle possède un boîtier propre (50) et est agencée sur une platine de montage (4), dans laquelle le socle de lampe (3) forme un deuxième boîtier, qui comporte un fond (31) et un couvercle (30) en forme de hotte, et dans laquelle la platine de montage (4) est agencée sur le fond (31) du deuxième boîtier et le couvercle en forme de hotte (30) recouvre l'unité de construction (5) ainsi que les composants (6) du dispositif d'allumage ou de fonctionnement agencés sur la platine de montage (4).

2. Lampe à décharge haute pression selon la revendication 1, dans laquelle les composants du dispositif d'allumage qui conduisent la haute tension comprennent un transformateur d'allumage (500), un condensateur d'allumage (510) et un éclateur à étincelles ou un élément à seuil analogue (520).

3. Lampe à décharge haute pression selon la revendication 2, dans laquelle le transformateur d'allumage (500) possède au moins un enroulement primaire (505) et au moins un enroulement secondaire (502) ainsi qu'un raccord haute tension relié audit au moins un enroulement secondaire (504), et dans laquelle le raccord haute tension (501) présente une partie (509) reliée à une arrivée de courant sortant hors de l'enceinte de décharge.

4. Lampe à décharge haute pression selon la revendication 3, dans laquelle la partie du raccord haute tension (501) reliée à une arrivée de courant sortant hors de l'enceinte de décharge est réalisée sous forme de contact à pince ou de contact à lames (509).

5. Lampe à décharge haute pression selon la revendication 3, dans laquelle le transformateur d'allumage (500) présente un noyau de ferrite (504), sur lequel est agencé ledit au moins un enroulement secondaire (504).

6. Lampe à décharge haute pression selon la revendication 5, dans laquelle le noyau de ferrite est constitué par un noyau en forme de barreau (502).

7. Lampe à décharge haute pression selon l'une quelconque des revendications 5 à 6, dans laquelle le transformateur d'allumage (500) possède un corps de bobine (503) en matériau électriquement isolant entourant le noyau de ferrite (502), et sur lequel est agencé ledit au moins un enroulement primaire (505).

8. Lampe à décharge haute pression selon la revendication 7, dans laquelle le corps de bobine est réalisé en forme de cadre (503), qui supporte le noyau de ferrite (502) sur deux côtés opposés l'un à l'autre.

9. Lampe à décharge haute pression selon la revendication 1, dans laquelle le couvercle en forme de hotte (30) comporte un passage (301) pour l'enceinte de décharge ou pour une arrivée de courant (11) sortant hors de l'enceinte de décharge.

10. Lampe à décharge haute pression selon l'une quelconque des revendications 1 à 9, dans laquelle le socle de lampe (3) est doté de moyens pour la protection électromagnétique des composants du dispositif d'allumage ou du dispositif de fonctionnement agencés dans son espace intérieur.

11. Lampe à décharge haute pression selon l'une quelconque des revendications 1 à 9, dans laquelle la lampe à décharge haute pression est dotée de moyens pour la protection électromagnétique des agents lumineux agencés dans l'espace intérieur de l'enceinte de décharge.
